# EUROPÄISCHE PATENTSCHRIFT

(11) **EP 1 447 574 B1**
(45) Veröffentlichungstag und Bekanntmachung des Hinweises auf die Patenterteilung: **20.07.2005**
(21) Anmeldenummer: 04405069.8
(22) Anmeldetag: 03.02.2004
(51) Int. Cl.: F16B 7/22

(54) **Kupplung zur axialen Verbindung einer ersten und einer zweiten Achse eines Ventils**
Coupling device for axially connecting a first and a second shaft of a valve
Dispositif d'accouplement pour raccorder axialement un premier et un deuxième axe d'une vanne

(30) Priorität: 13.02.2003 CH 217032003
(43) Veröffentlichungstag der Anmeldung: 18.08.2004
(73) Patentinhaber: Fr. Sauter AG, 4016 Basel (CH)
(72) Erfinder: Niedbalski, Bruno, 4057 Basel (CH); Müller, Roman, 4147 Aesch (CH)
(74) Vertreter: Bollhalder, Renato

(56) Entgegenhaltungen:
- WO-A-85/04456
- US-A- 3 761 053
- US-B1- 6 343 630

## Beschreibung

Die vorliegende Erfindung bezieht sich auf eine Kupplung zur axialen Verbindung einer ersten und einer zweiten Achse eines Ventils, wobei die beiden Achsen jeweils mit einer Ringnut oder einem Ringvorsprung versehen sind und eine der beiden Achsen eine Antriebsachse und die andere der beiden Achsen eine Verstellachse des Ventils ist. Eine solche Kupplung ist aus dem Dokument US 3,761,053 bekannt.

Solche Kupplungen werden zur Verbindung eines Ventilantriebs und einer Verstellachse eines Ventils eingesetzt. Die hierfür bekannten Kupplungen besitzen meist entweder Gewindeverbindungen oder dann Schieberverriegelungen. Erstere weisen den Nachteil auf, dass die Verbindung der zwei Achsen eine Schraubbewegung erfordert und daher relativ aufwendig ist. Letztere haben im Allgemeinen ein gewisses Spiel und sind zudem bei gleicher Baugrösse oft für hohe Kräfte ungeeignet.

Angesichts der Nachteile der bisher bekannten, oben beschriebenen Kupplungen liegt der Erfindung die folgende Aufgabe zugrunde. Zu schaffen ist eine Kupplung zur axialen Verbindung einer Antriebsachse und einer Verstellachse eines Ventils, mit der die Achsen einfach verbindbar und wieder voneinander lösbar sind, wobei die Verbindung der beiden Achsen höchstens ein geringes Spiel aufweisen darf und möglichst auch für hohe Kräfte geeignet sein soll.

Diese Aufgabe wird durch die erfindungsgemässe Kupplung gelöst, wie sie im unabhängigen Patentanspruch 1 definiert ist. Bevorzugte Ausführungsvarianten ergeben sich aus den abhängigen Patentansprüchen.

Das Wesen der Erfindung besteht im Folgenden: Eine Kupplung zur axialen Verbindung einer ersten und einer zweiten Achse eines Ventils, wobei die beiden Achsen jeweils mit einer Ringnut oder einem Ringvorsprung versehen sind und eine der beiden Achsen eine Antriebsachse und die andere der beiden Achsen eine Verstellachse des Ventils ist, umfasst einen auf der ersten Achse axial verschiebbaren Verriegelungsring, ein zwischen der ersten Achse und der zweiten Achse angeordnetes Spreizteil sowie mindestens ein schwenkbar angeordnetes Haltekrallenelement. Das Spreizteil ist in axialer Richtung von der ersten Achse zur zweiten Achse hin vorgespannt. Das Haltekrallenelement weist eine in die Ringnut bzw. hinter den Ringvorsprung der ersten Achse greifende erste Kralle und eine zweite Kralle auf, die bei axial verbundener erster und zweiter Achse in die Ringnut bzw. hinter den Ringvorsprung der zweiten Achse greift und vom Verriegelungsring dort gehalten ist. Bei von der ersten Achse gelöster zweiter Achse ist der Verriegelungsring axial von der zweiten Kralle des mindestens einen Haltekrallenelements wegverschoben und das Spreizteil ist durch die Vorspannung von der ersten Achse axial wegbewegt und spreizt die zweite Kralle des mindestens einen Haltekrallenelements vom Ankupplungsort der zweiten Achse weg.

Die erfindungsgemässe Kupplung ermöglicht ein einfaches, automatisches Verbinden und wieder Lösen zweier Achsen eines Ventils durch Bewegen der einen Achse bzw. des Verriegelungsrings in axialer Richtung. Sind die beiden Achsen voneinander getrennt, befindet sich das Spreizteil in axialer Richtung in einem Abstand vor der ersten Achse und spreizt die zweite Kralle des mindestens einen Haltekrallenelements vom Ankupplungsort der zweiten Achse weg. Zum Verbinden der beiden Achsen wird nun mit dem zu verbindenden Ende der zweiten Achse axial auf das Spreizteil gedrückt und dieses zur ersten Achse hin verschoben. Dadurch entfällt die Spreizwirkung des Spreizteils auf die zweite Kralle des mindestens einen Haltekrallenelements und diese kann zum Ankupplungsort der zweiten Achse hin geschwenkt werden. Dies geschieht beispielsweise mittels einer vom Verriegelungsring auf das Haltekrallenelement ausgeübten Kraft, die sich vorzugsweise aus einer Vorspannung des Verriegelungsrings in axialer Richtung von der ersten Achse zur zweiten Achse hin oder aufgrund des Eigengewichts des Verriegelungsrings ergibt. Die zweite Kralle wird soweit geschwenkt, bis sie in die Ringnut bzw. hinter den Ringvorsprung der zweiten Achse greift und an der zweiten Achse anliegt und so eine Verbindung gewährleistet. In dieser Stellung wird sie vom Verriegelungsring blockiert. Auf diese Weise kann allein durch eine Bewegung der zweiten Achse in axialer Richtung der Kupplungsvorgang ausgelöst werden, der ansonsten automatisch abläuft.

Zum Lösen der Verbindung wird der Verriegelungsring von der zweiten Kralle des mindestens einen Haltekrallenelements axial wegverschoben. Da die zweite Kralle nun nicht mehr durch den Verriegelungsring blockiert ist, wird das Spreizteil durch die Vorspannung von der ersten Achse axial wegbewegt, wobei das Spreizteil die zweite Kralle des mindestens einen Haltekrallenelements von der zweiten Achse wegspreizt und je nach Gegenkraft gleichzeitig die zweite Achse axial von der ersten Achse wegstösst. Auf diese Weise kann allein durch eine Bewegung des Verriegelungsrings in axialer Richtung der Entkupplungsvorgang ausgelöst werden, der ansonsten automatisch abläuft.

Da das Verbinden und Lösen zweier Achsen mit der erfindungsgemässen Kupplung mittels nur zweier axialer Bewegungen von aussen bewirkt werden kann, eignet sich die Kupplung auch für eine vollständig automatisierte Betätigung.

Mit Vorteil ist bei axial verbundener erster und zweiter Achse das mindestens eine Haltekrallenelement zwischen dem Verriegelungsring einerseits und der ersten und zweiten Achse anderseits gehalten. Der Verriegelungsring kann so das Haltekrallenelement gegen die beiden Achsen drücken und eine stabile Lage des Haltekrallenelements sowie eine Verbindung der beiden Achsen sichern.

Vorzugsweise ist der Verriegelungsring axial in Richtung zur zweiten Kralle des mindestens einen Haltekrallenelements vorgespannt. Die Vorspannung kann insbesondere mittels eines um die erste Achse herum angeordneten elastischen Elements, beispielsweise einer Druckfeder, erzeugt werden. Durch die Vorspannung wird die Verschiebung des Verriegelungsrings axial in Richtung von der ersten Achse zu der zweiten Achse gewährleistet, wobei auf das Haltekrallenelement eine Kraft ausgeübt wird, durch die die zweite Kralle zum Ankupplungsort der zweiten Achse hin geschwenkt wird, genauer in die Ringnut bzw. hinter den Ringvorsprung der zweiten Achse.

Bei einer vorteilhaften Ausführungsvariante weist der Verriegelungsring eine Wand auf, die auf ihrer Innenseite mit mindestens einer Ausnehmung versehen ist, in der das Haltekrallenelement bzw. eines der Haltekrallenelemente geführt ist. Durch die Führung des Haltekrallenelements ist eine definierte Schwenkbewegung des Haltekrallenelements gewährleistet. Ein seitliches Kippen und Verkanten wird verhindert.

Bei einer alternativen vorteilhaften Ausführungsvariante ist das mindestens eine Haltekrallenelement ohne seitliche Führung zwischen dem Verriegelungsring und der ersten Achse und allenfalls der zweiten Achse angeordnet. Dies ermöglicht das Anordnen von mehreren Haltekrallenelementen direkt nebeneinander, ohne dass Platz für seitliche Führungen verloren geht, so dass eine höhere Belastbarkeit erreicht wird.

Bevorzugt ist das Spreizteil scheibenförmig und mit einem Bolzen verbunden, der in einem Bolzenloch in der ersten Achse axial verschiebbar gelagert ist. Das Spreizteil ist so durch den Bolzen in der ersten Achse geführt und kann sich im Wesentlichen nur in axialer Richtung bewegen, wodurch ein seitliches Wegkippen verhindert wird.

Mit Vorteil ist in oder an der ersten Achse ein elastisches Element, beispielsweise eine Druckfeder, gelagert, das die Vorspannung des Spreizteils in axialer Richtung von der ersten Achse zur zweiten Achse hin erzeugt. Das elastische Element ist vorzugsweise im oben erwähnten Bolzenloch zwischen dem Bolzen und dem Ende des Bolzenlochs gelagert. Mit einem solchen elastischen Element kann die erforderliche Vorspannung des Spreizteils in axialer Richtung in einer gewünschten Stärke auf einfache Weise erzeugt werden.

Bevorzugt weist das mindestens eine Haltekrallenelement auf der dem Spreizteil zugewandten Seite oder das Spreizteil auf der dem mindestens einen Haltekrallenelement zugewandten Seite eine Schrägfläche auf, die bei axial verbundener erster und zweiter Achse in der axialen Richtung von der ersten Achse zur zweiten Achse von einem weiter von einer Achsenmittelachse entfernten Bereich in Richtung zur Achsenmittelachse hin verläuft, so dass beim Wegbewegen des Spreizteils von der ersten Achse das Spreizteil entlang dem mindestens einen Haltekrallenelement gleitet und aufgrund der Schrägfläche das mindestens eine Haltekrallenelement vom Ankupplungsort der zweiten Achse wegspreizt. Diese Schrägfläche erleichtert das Lösen der Verbindung zwischen der ersten Achse und der zweiten Achse, da das Spreizteil während seiner Gleitbewegung über die Schrägfläche eine kontinuierliche und regelmässige Kraft auf das mindestens einen Haltekrallenelement ausübt, so dass die zweite Kralle des mindestens einen Haltekrallenelements von der zweiten Achse kontinuierlich weggeschwenkt wird.

Bei einer vorteilhaften Ausführungsvariante weist das mindestens eine Haltekrallenelement symmetrische erste und zweite Krallen auf. Dies macht die Herstellung der Haltekrallenelemente kostengünstiger und schliesst eine fehlerhafte Installation aus.

Mit Vorteil umfasst die erfindungsgemässe Kupplung mehrere der genannten Haltekrallenelemente, die um die erste und die zweite Achse herum gleichmässig verteilt sind. Dies stabilisiert einerseits die Verbindung zwischen den beiden Achsen und erhöht anderseits die Haltekraft.

Bei einer bevorzugten Ausführungsvariante ist die erste Achse die Antriebsachse und die zweite Achse die Verstellachse des Ventils. Die erfindungsgemässe Kupplung ist für diese Anwendung insbesondere dadurch vorteilhaft, dass sie kein wesentliches Spiel aufweist.

Im Folgenden wird die erfindungsgemässe Kupplung unter Bezugnahme auf die beigefügten Zeichnungen anhand von drei Ausführungsbeispielen detaillierter beschrieben. Es zeigen:
- Fig. 1 -: eine Seitenansicht eines motorbetriebenen Ventils mit einem ersten Ausführungsbeispiel der erfindungsgemässen Kupplung zur Verbindung einer Antriebsachse mit einer Verstellachse;
- Fig. 2 -: eine Perspektivansicht der Kupplung von Fig. 1 mit der Antriebsachse als erster Achse und der Verstellachse als zweiter Achse;
- Fig. 3 -: die Kupplung von Fig. 2 bei von der ersten Achse gelöster zweiter Achse in einer teilweisen Schnittansicht;
- Fig. 4 -: die Kupplung von Fig. 2 bei axial verbundener erster und zweiter Achse in einer teilweisen Schnittansicht;
- Fig. 5 -: ein zweites Ausführungsbeispiel der erfindungsgemässen Kupplung bei von der ersten Achse gelöster zweiter Achse in einer teilweisen Schnittansicht;
- Fig. 6 -: die Kupplung von Fig. 5 bei axial verbundener erster und zweiter Achse in einer teilweisen Schnittansicht; und
- Fig. 7 -: eine Perspektivansicht eines dritten Ausführungsbeispiels der erfindungsgemässen Kupplung mit geführten Haltekrallenelementen.

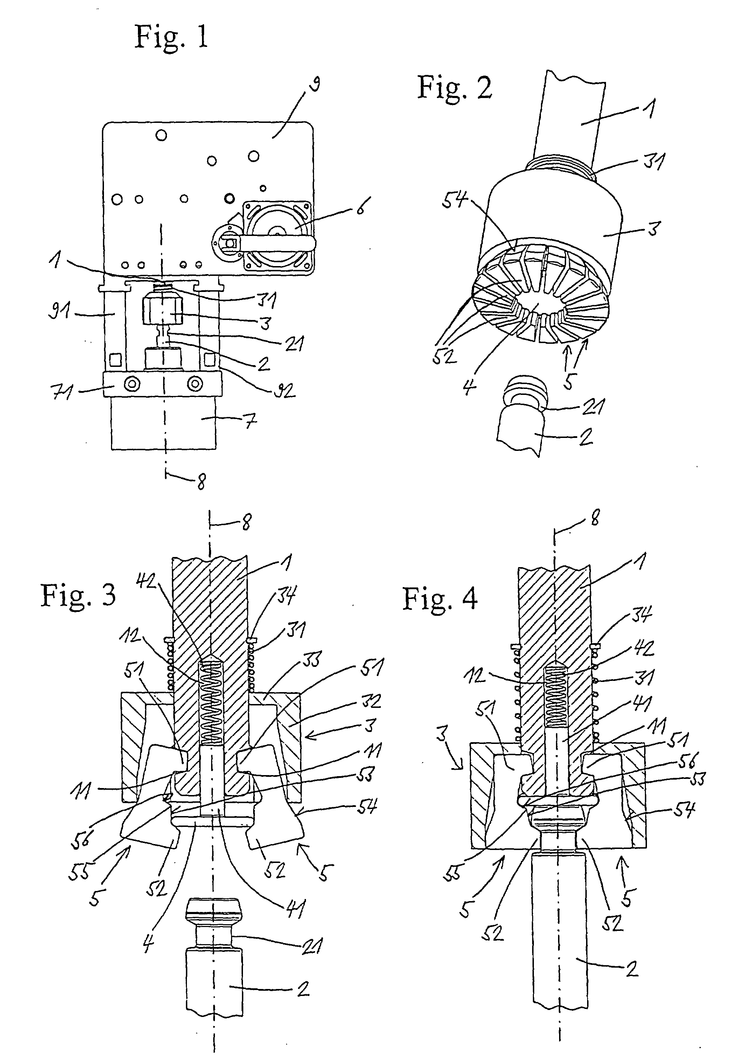

In Fig. 1 ist ein motorbetriebenes Ventil mit einem ersten Ausführungsbeispiel der erfindungsgemässen Kupplung dargestellt. Das Ventil 7 ist über eine Verstellachse 2, die mit einem Verstellorgan verbunden ist, verstellbar. Die Verstellachse 2, im Folgenden auch zweite Achse genannt, weist eine Ringnut 21 auf, die ein Eingreifen von Krallen von Haltekrallenelementen ermöglichen. Die Haltekrallenelemente sind in Fig. 1 aus Übersichtlichkeitsgründen nicht eingezeichnet. Zum Verstellen der zweiten Achse 2 wird diese an eine erste Achse 1, eine Antriebsachse, gekoppelt, wobei die beiden Achsen 1 und 2 im Wesentlichen in einer Flucht angeordnet sind. Von der Kupplung ist in Fig. 1 ein auf der ersten Achse 1 axial verschiebbar angeordneter Verriegelungsring 3 sichtbar, der durch eine um die erste Achse 1 herum angeordnete Druckfeder 31 in Richtung zur zweiten Achse 2 hin axial vorgespannt ist. Die erste Achse 1 wird ihrerseits von einem Motor 6 angetrieben, beispielsweise einem Schrittmotor. Der Motor 6 ist in einem Gehäuse 9 angeordnet, das über zwei Verbindungsstangen 91 und 92 mit einem Ventiladapter 71 verbunden ist.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen.

Aus den Fig. 2 und 3 sind die wesentlichen Bestandteile der Kupplung gemäss dem ersten Ausführungsbeispiel ersichtlich. Neben der mit der Ringnut 21 versehenen zweiten Achse 2 weist auch die erste Achse 1 in der Nähe ihres Kopplungsendes eine Ringnut 11 auf. In diese Ringnut 11 greift jeweils eine erste Kralle 51 einer Vielzahl von Haltekrallenelementen 5, die rund um die erste Achse 1 herum angeordnet sind. Die Haltekrallenelemente 5 weisen neben der ersten Kralle 51 jeweils noch eine zweite Kralle 52 sowie eine innere Schrägfläche 53 und eine äussere Schrägfläche 54 auf. Die Schrägfläche 53 verläuft bei aneinandergekoppelter erster Achse 1 und zweiter Achse 2, wie in Fig. 4 dargestellt, in der axialen Richtung von der ersten Achse 1 zur zweiten Achse 2 von einem weiter von einer Achsenmittelachse 8 entfernten Bereich in Richtung zur Achsenmittelachse 8 hin, während die Schrägfläche 54 von einem näher bei der Achsenmittelachse 8 liegenden Bereich von der Achsenmittelachse 8 weg nach aussen verläuft.

Die Schrägflächen 53 der Haltekrallenelemente 5 liegen bei voneinander gelösten Achsen 1, 2, wie in den Fig. 2 und 3 dargestellt, an einem scheibenförmigen Spreizteil 4 an. Das Spreizteil 4 spreizt die Schrägflächen 53 und in der Folge auch die zweiten Krallen 52 der Haltekrallenelemente 5 vom Ankupplungsort der zweiten Achse 2 radial weg, so dass die Haltekrallenelemente 5 im Vergleich zu ihrer Stellung bei aneinandergekoppelter erster Achse 1 und zweiter Achse 2 um etwa 15° geschwenkt sind und genug Platz für die Einführung der zweiten Achse 2 zwischen die Haltekrallenelemente 5 vorhanden ist.

Das Spreizteil 4 ist an einem Bolzen 41 angebracht, der in einem Bolzenloch 12 in der ersten Achse 1 axial verschiebbar gelagert ist. Im Bolzenloch 12 zwischen dem Bolzen 41 und dem Ende des Bolzenlochs 12 ist eine Druckfeder 42 gelagert, die den Bolzen 41 und damit auch das Spreizteil 4 in axialer Richtung von der ersten Achse 1 zur zweiten Achse 2 hin vorspannt. Das Spreizteil 4 hat daher die Tendenz, sich von der ersten Achse 1 wegzubewegen und im Zusammenspiel mit den Schrägflächen 53 der Haltekrallenelemente 5 die zweiten Krallen 52 nach aussen zu spreizen.

Die Spreizung der zweiten Krallen 52 bzw. die Schwenkung der Haltekrallenelemente 5 wird begrenzt durch den Verriegelungsring 3, an dessen Innenseite die Aussenseiten der Haltekrallenelemente 5 anliegen. Der Verriegelungsring 3 umfasst eine im Wesentlichen zylindrische Wand 32 und eine Deckenscheibe 33 mit einer Durchgangsöffnung für die erste Achse 1. Der Durchmesser der Durchgangsöffnung ist minim grösser als derjenige der ersten Achse 1, so dass der Verriegelungsring 3 auf der ersten Achse 1 axial verschiebbar ist, aber gegen diese nicht wesentlich verkippt werden kann. Der Verriegelungsring 3 ist mittels einer um die erste Achse 1 herum angeordneten Druckfeder 31 axial in Richtung zu den zweiten Krallen 52 der Haltekrallenelemente 5 vorgespannt. Die Druckfeder 31 ist hierzu zwischen der Deckenscheibe 33 des Verriegelungsrings 3 und einem an der ersten Achse 1 angebrachten Stützring 34 angeordnet.

Durch Wahl geeigneter Druckfedern 32 und 42 und Schrägflächen 53 auf der Innenseite und 54 auf der Aussenseite der Haltekrallenelemente 5 kann sichergestellt werden, dass die in den Fig. 2 und 3 dargestellte Stellung der einzelnen Kupplungsteile stabil ist. Hierzu darf insbesondere die Vorspannkraft der Druckfeder 31 nicht zu gross sein, damit durch die auf die Haltekrallenelemente 5 ausgeübte Kraft das Spreizteil 4 nicht gegen die erste Achse 1 geschoben wird.

Zum Ankoppeln der zweiten Achse 2 wird diese in axialer Richtung gegen das Spreizteil 4 gedrückt und auf diese Weise das Spreizteil 4 gegen die Kraft der Druckfeder 42 zur ersten Achse 1 hin bewegt. Dabei gleitet das Spreizteil 4 entlang der Schrägflächen 53 der Haltekrallenelemente 5, bis Scheitellinien 55 überschritten werden. Bis zu diesem Zeitpunkt schwenken sich die Haltekrallenelemente 5 nicht wesentlich. Nach dem Überschreiten der Scheitellinien 55 schnappen diese sowie die wesentlich flacheren Schrägflächen 56 der Haltekrallenelemente 5 hinter dem Spreizteil 4 ein, da sich die Haltekrallenelemente 5 nun aufgrund der vom Verriegelungsring 3 ausgeübten Kraft schlagartig schwenken. Hierdurch werden auch die zweiten Krallen 52 in die Ringnut 21 der zweiten Achse 2 gedrückt, bis sie daran anliegen und die zweite Achse 2 halten. Die zweiten Krallen 52 werden vom Verriegelungsring 3 in dieser Stellung gehalten. Auch diese in Fig. 4 dargestellte Stellung der einzelnen Kupplungsteile ist stabil.

Zum Lösen der zweiten Achse 2 wird der Verriegelungsring 3 gegen die Kraft der Druckfeder 31 von den zweiten Krallen 52 der Haltekrallenelemente 5 in axialer Richtung wegbewegt. Dadurch wird den Haltekrallenelementen 5 wieder ermöglicht, sich zu schwenken. Die für die Schwenkbewegung benötigte Kraft wird durch die Druckfeder 42 erzeugt, welche den Bolzen 41 und das Spreizteil 4 axial in Richtung zweiter Krallen 52 stösst, wobei die axiale Bewegung des Spreizteils 4 über eine Kraftumleitung durch die Schrägflächen 56 Schwenkbewegungen der Haltekrallenelemente 5 bewirkt. Nach vollständiger Wegspreizung der zweiten Krallen 52 der Haltekrallenelemente 5 vom Ankupplungsort der zweiten Achse 2 wird wieder die in den Fig. 2 und 3 dargestellte Situation erreicht.

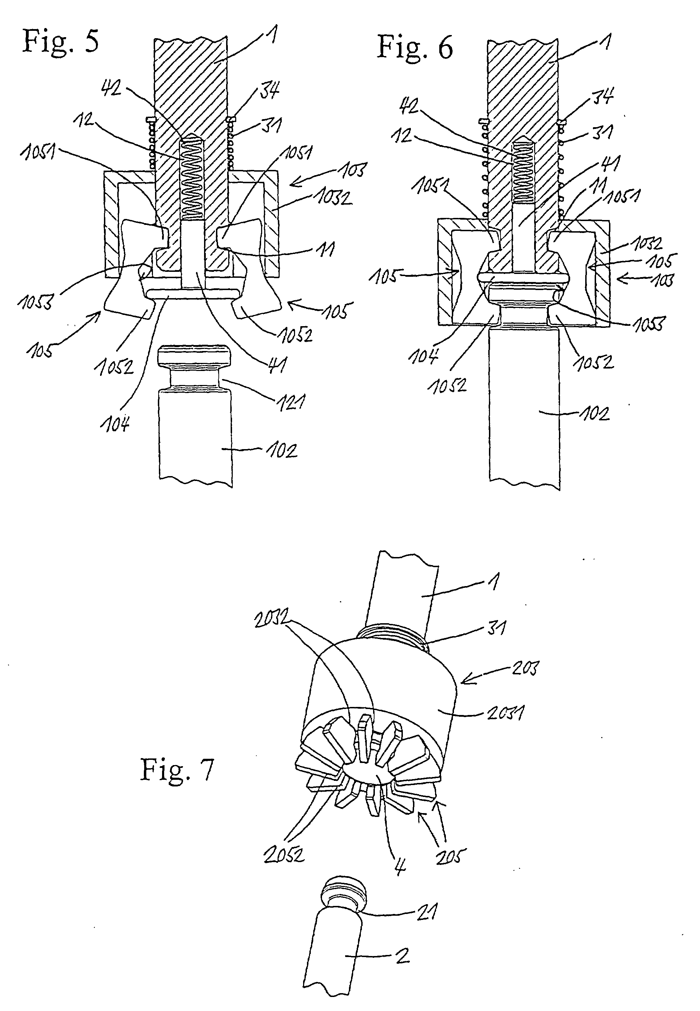

Bei dem in den Fig. 5 und 6 dargestellten zweiten Ausführungsbeispiel der erfindungsgemässen Kupplung wird eine im Vergleich zum ersten Ausführungsbeispiel dickere zweite Achse 102 mit Ringnut 121 an die erste Achse 1 gekoppelt. Um diese dickere zweite Achse 102 aufnehmen zu können, sind einerseits die Haltekrallenelemente 105 weniger breit ausgebildet, insbesondere im Bereich der zweiten Kralle 1052, und anderseits ist auch die zylindrische Wand 1032 des Verriegelungsrings 103 dünner, so dass der Abstand der Innenseite der zylindrischen Wand 1032 von der ersten Achse 1 grösser ist. Ausserdem weisen die Haltekrallenelemente 105 anstelle der Schrägflächen 53 und 56 und der Scheitellinie 55 der Haltekrallenelemente 5 nur eine durchgehende Schrägfläche 1053 auf, mit der das ein wenig grössere Spreizteil 104 ständig in Kontakt ist. Die ersten Krallen 1051 und die weiteren Elemente entsprechen im Wesentlichen dem ersten Ausführungsbeispiel. Die ersten Krallen 1051 und zweiten Krallen 1052 sind symmetrisch, was einerseits eine kostengünstigere Herstellung und anderseits eine umgekehrte Installation ermöglicht.

Das Ankoppeln und wieder Lösen der zweiten Achse 102 läuft weitgehend wie beim ersten Ausführungsbeispiel ab, der einzige wesentliche Unterschied besteht darin, dass beim Ankoppeln die Haltekrallenelemente 105 direkt bei Beginn des auf die erste Achse 1 Zubewegens des Spreizteils 104 zu schwenken beginnen und nicht erst beim Überschreiten einer hier nicht vorhandenen Scheitellinie und umgekehrt natürlich beim Lösen der zweiten Achse 102 die Haltekrallenelemente 105 bis zum Schluss geschwenkt werden.

Beim in Fig. 7 dargestellten dritten Ausführungsbeispiel der erfindungsgemässen Kupplung weist ein Verriegelungsring 203 eine im Vergleich zum ersten Ausführungsbeispiel dickere zylindrische Wand 2031 auf. Die zylindrische Wand 2031 ist auf ihrer Innenseite mit Ausnehmungen 2032 zur Aufnahme der Haltekrallenelemente 205 mit zweiten Krallen 2052 versehen. Die Haltekrallenelemente 205 sind in den Ausnehmungen 2032 seitlich geführt, wodurch ein Wegkippen verunmöglicht wird. Ansonsten gilt das zum ersten Ausführungsbeispiel Gesagte.

Zu den vorbeschriebenen erfindungsgemässen Kupplungen sind weitere konstruktive Variationen realisierbar. Hier ausdrücklich erwähnt sei noch, dass bei genügend schwerer Ausbildung des Verriegelungsrings unter Umständen auf die Druckfeder 31 verzichtet werden kann, da dann die Schwerkraft an die Stelle der Federkraft treten kann.

## Patentansprüche

1. Kupplung zur axialen Verbindung einer ersten und einer zweiten Achse (1, 2; 102) eines Ventils (7), wobei die beiden Achsen (1, 2; 102) jeweils mit einer Ringnut (11, 21; 121) oder einem Ringvorsprung versehen sind und eine der beiden Achsen (1) eine Antriebsachse und die andere der beiden Achsen (2; 102) eine Verstellachse des Ventils (7) ist, **dadurch gekennzeichnet, dass** sie einen auf der ersten Achse (1) axial verschiebbaren Verriegelungsring (3; 103; 203), ein zwischen der ersten Achse (1) und der zweiten Achse (2; 102) angeordnetes, in axialer Richtung von der ersten Achse (1) zur zweiten Achse (2; 102) hin vorgespanntes Spreizteil (4; 104) sowie mindestens ein schwenkbar angeordnetes Haltekrallenelement (5; 105; 205) umfasst, welches eine in die Ringnut (11) bzw. hinter den Ringvorsprung der ersten Achse (1) greifende erste Kralle (51) und eine zweite Kralle (52; 1052; 2052) aufweist, die bei axial verbundener erster und zweiter Achse (1, 2; 102) in die Ringnut (21; 121) bzw. hinter den Ringvorsprung der zweiten Achse (2; 102) greift und vom Verriegelungsring (3; 103; 203) dort gehalten ist, wobei bei von der ersten Achse (1) gelöster zweiter Achse (2; 102) der Verriegelungsring (3; 103; 203) axial von der zweiten Kralle (52; 1052; 2052) des mindestens einen Haltekrallenelements (5; 105; 205) wegverschoben ist und das Spreizteil (4; 104) durch die Vorspannung von der ersten Achse (1) axial wegbewegt ist und die zweite Kralle (52; 1052; 2052) des mindestens einen Haltekrallenelements (5; 105; 205) vom Ankupplungsort der zweiten Achse (2; 102) wegspreizt.

2. Kupplung nach Anspruch 1, **dadurch gekennzeichnet, dass** bei axial verbundener erster und zweiter Achse (1, 2; 102) das mindestens eine Haltekrallenelement (5; 105; 205) zwischen dem Verriegelungsring (3; 103; 203) einerseits und der ersten und zweiten Achse (1, 2; 102) anderseits gehalten ist.

3. Kupplung nach Anspruch 1 oder 2, **dadurch gekennzeichnet, dass** der Verriegelungsring (3; 103; 203) axial in Richtung zur zweiten Kralle (52; 1052; 2052) des mindestens einen Haltekrallenelements (5; 105; 205) vorgespannt ist, insbesondere mittels eines um die erste Achse (1) herum angeordneten elastischen Elements (31).

4. Kupplung nach einem der Ansprüche 1 bis 3, **dadurch gekennzeichnet, dass** der Verriegelungsring (203) eine Wand (2031) aufweist, die auf ihrer Innenseite mit mindestens einer Ausnehmung (2032) versehen ist, in der das Haltekrallenelement bzw. eines der Haltekrallenelemente (205) geführt ist.

5. Kupplung nach einem der Ansprüche 1 bis 4, **dadurch gekennzeichnet, dass** das Spreizteil (4; 104) scheibenförmig ist und mit einem Bolzen (41) verbunden ist, der in einem Bolzenloch (12) in der ersten Achse (1) axial verschiebbar gelagert ist.

6. Kupplung nach einem der Ansprüche 1 bis 5, **dadurch gekennzeichnet, dass** in oder an der ersten Achse (1) ein elastisches Element (42) gelagert ist, das die Vorspannung des Spreizteils (4; 104) in axialer Richtung von der ersten Achse (1) zur zweiten Achse (2; 102) hin erzeugt.

7. Kupplung nach einem der Ansprüche 1 bis 6, **dadurch gekennzeichnet, dass** das mindestens eine Haltekrallenelement (5; 105; 205) auf der dem Spreizteil (4; 104) zugewandten Seite oder das Spreizteil auf der dem mindestens einen Haltekrallenelement zugewandten Seite eine Schrägfläche (53, 56; 1053) aufweist, die bei axial verbundener erster und zweiter Achse (1, 2; 102) in der axialen Richtung von der ersten Achse (1) zur zweiten Achse (2; 102) von einem weiter von einer Achsenmittelachse (8) entfernten Bereich in Richtung zur Achsenmittelachse (8) hin verläuft, so dass beim Wegbewegen des Spreizteils (4; 104) von der ersten Achse (1) das Spreizteil (4; 104) entlang dem mindestens einen Haltekrallenelement (5; 105; 205) gleitet und aufgrund der Schrägfläche (53, 56; 1053) das mindestens eine Haltekrallenelement (5; 105; 205) vom Ankupplungsort der zweiten Achse (2; 102) wegspreizt.

8. Kupplung nach einem der Ansprüche 1 bis 7, **dadurch gekennzeichnet, dass** das mindestens eine Haltekrallenelement (5; 105; 205) symmetrische erste und zweite Krallen (1051, 1052) aufweist.

9. Kupplung nach einem der Ansprüche 1 bis 8, **dadurch gekennzeichnet, dass** sie mehrere der genannten Haltekrallenelemente (5; 105; 205) umfasst, die um die erste und die zweite Achse (1, 2; 102) herum gleichmässig verteilt sind.

10. Kupplung nach einem der Ansprüche 1 bis 9, **dadurch gekennzeichnet, dass** die erste Achse (1) die Antriebsachse und die zweite Achse (2; 102) die Verstellachse des Ventils (7) ist.

## Claims

1. A coupling for axially connecting a first and a second shaft (1, 2; 102) of a valve (7), wherein the two shafts (1, 2; 102) are each provided with an annular groove (11, 21; 121) or an annular prominence and one of the two shafts (1) is a driving shaft and the other of the two shafts (2; 102) is an adjusting shaft of the valve (7), **characterized in that** it comprises a locking ring (3; 103; 203) that is axially displaceable on the first shaft (1), an expansion part (4; 104) arranged between the first shaft (1) and the second shaft (2; 102) that is biased axially from the first shaft (1) towards the second shaft (2; 102) and at least one pivotably arranged retaining claw element (5; 105; 205), which has a first claw (51) engaging in the annular groove (11) or behind the annular prominence of the first shaft (1) and a second claw (52; 1052; 2052), which in the case of the axially connected first and second shaft (1, 2; 102) engages in the annular groove (21; 121) or behind the annular prominence of the second shaft (2; 102) and is retained there by the locking ring (3; 103; 203), whereby in the case of the second shaft (2; 102) released from the first shaft (1) the locking ring (3; 103; 203) is pushed axially away from the second claw (52; 1052; 2052) of the at least one retaining claw element (5; 105; 205) and the expansion part (4; 104) is moved axially away from the first shaft (1) by the biasing and the second claw (52; 1052; 2052) of the at least one retaining claw element (5; 105; 205) is expanded away from the coupling point of the second shaft (2; 102).

2. Coupling according to Claim 1, **characterised in that** in the case of the connected first and second shaft (1, 2; 102) the at least one retaining claw element (5; 105; 205) is held between the locking ring (3; 103; 203) on the one hand and the first and second shaft (1, 2; 102) on the other hand.

3. Coupling according to Claim 1 or 2, **characterised in that** the locking ring (3; 103; 203) is biased axially towards the second claw (52; 1052; 2052) of the at least one retaining claw element (5; 105; 205), in particular by means of an elastic element (31) arranged around the first shaft (1).

4. Coupling according to one of Claims 1 to 3, **characterised in that** the locking ring (203) has a wall (2031), which is provided with at least one recess (2032) on its inner side, in which the retaining claw element or one of the retaining claw elements (205) is guided.

5. Coupling according to one of Claims 1 to 4, **characterised in that** the expansion part (4; 104) is disk-shaped and is connected to a bolt (41), which is axially displaceably mounted in a bolt bore (12) in the first shaft (1).

6. Coupling according to one of Claims 1 to 5, **characterised in that** an elastic element (42) is mounted in or on the first shaft (1), which generates the bias of the expansion part (4; 104) axially from the first shaft (1) to the second shaft (2; 102).

7. Coupling according to one of Claims 1 to 6, **characterised in that** the at least one retaining claw element (5; 105; 205), on the side facing the expansion part (4; 104), or the expansion part, on the side facing the at least one retaining claw element, has an inclined surface (53, 56; 1053), which in the case of the axially connected first shaft and second shaft (1, 2; 102) runs from a zone further removed from a shaft central axis (8) towards the shaft central axis (8), so that during movement of the expansion part (4; 104) away from the first shaft (1) the expansion part (4; 104) slides along the at least one retaining claw element (5; 105; 205) and, because of the inclined surface (53, 56; 1053), expands the at least one retaining claw element (5; 105; 205) away from the coupling point of the second shaft (2; 102).

8. Coupling according to one of Claims 1 to 7, **characterised in that** the at least one retaining claw element (5; 105; 205) has symmetrical first and second claws (1051, 1052).

9. Coupling according to one of Claims 1 to 8, **characterised in that** it comprises a plurality of the aforesaid retaining claw elements (5; 105; 205), which are evenly distributed around the first and the second shaft (1, 2; 102).

10. Coupling according to one of Claims 1 to 9, **characterised in that** the first shaft (1) is the driving shaft and the second shaft (2; 102) is the adjusting shaft of the valve (7).

## Revendications

1. Accouplement pour la liaison axiale d'un premier et d'un second axes (1,2;102) d'une vanne (7), dans lequel les deux axes (1,2;102) sont pourvus respectivement d'une gorge annulaire (11, 21;121) ou d'une partie saillante annulaire et l'un des deux axes (1) est un axe d'entraînement et l'autre des deux axes (2; 102) est un axe de réglage de la vanne (7), **caractérisé en ce que** l'accouplement comprend une bague de verrouillage (3;103; 203), qui est déplaçable axialement sur le premier axe (1), une pièce d'écartement (4;104) qui est disposée entre le premier axe (1) et le second axe (2;102) et est précontrainte dans la direction axiale du premier axe (1) vers le second axe (2;102), ainsi qu'un élément à griffes de retenue (5;105;205) disposé de manière à pouvoir pivoter et qui comporte une première griffe (51), qui s'engage dans la gorge annulaire (11) ou derrière la partie saillante annulaire du premier axe (1), et une seconde griffe (52;1052;2052), qui, dans le cas où les premier et second axes (1,2;102) sont reliés axialement, s'engage dans la gorge annulaire (21;121) ou en arrière de la partie saillante annulaire du second axe (2;102) et y est retenue par la bague de verrouillage (3;103;203), et dans le cas où le second axe (2;102) est détaché du premier axe (1), la bague de verrouillage (3;103;203) est écartée axialement par la seconde griffe (52;1052;2052) du au moins un élément à griffes de retenue (5;105;205) et la pièce d'écartement (4 ;104) est déplacée par la précontrainte du premier axe (1) dans une direction axiale et la seconde griffe (52 ;1052 ;2052) du au moins un élément à griffes de retenue (5 ;105 ;205) est écartée de l'emplacement d'accouplement du second axe (2;102).

2. Accouplement selon la revendication 1, **caractérisé en ce que** dans le cas où les premier et second axes (1;2;102) sont reliés axialement, le au moins un élément à griffes de retenue (5;105;205) est retenu entre la bague de verrouillage (3;103;203) d'une part et les premier et second axes (1,2;102) d'autre part.

3. Accouplement selon la revendication 1 ou 2, **caractérisé en ce que** la bague de verrouillage (3;103;203) est précontrainte axialement en direction de la seconde griffe (52;1052;2052) du au moins un élément à griffes de retenue (5;105;205), notamment à l'aide d'un élément élastique (31) disposé autour du premier axe (1).

4. Accouplement selon l'une des revendications 1 à 3, **caractérisé en ce que** la bague de verrouillage (203) possède une paroi (2031), qui comporte, sur son côté intérieur, au moins un évidement (2032), dans lequel l'élément à griffes de retenue ou l'un des éléments à griffes de retenue (205) est guidé.

5. Accouplement selon l'une des revendications 1 à 4, **caractérisé en ce que** la pièce d'écartement (4;104) est en forme de disque et est reliée à un goujon (41), qui est monté de manière à être déplaçable axialement dans un trou de goujon (12) dans le premier axe (1).

6. Accouplement selon l'une des revendications 1 à 5, **caractérisé en ce que** dans ou sur le premier axe (1) est monté un élément élastique (42), qui produit la précontrainte de la pièce d'écartement (4;104) dans une direction axiale depuis le premier axe (1) en direction du second axe (2;102).

7. Accouplement selon l'une des revendications 1 à 6, **caractérisé en ce que** le au moins un élément à griffes de retenue (5;105;205) comporte, sur le côté tourné vers la pièce d'écartement (4;104), ou la pièce d'écartement comporte sur le côté tourné vers le au moins un élément à griffes de retenue, une surface oblique (53,56;1053) qui, lorsque les premier et second axes (1,2;102) sont reliés axialement, s'étend dans la direction axiale depuis le premier axe (1) en direction du second axe (2;102) depuis une zone plus éloignée d'un axe médian (8) des axes, en direction de cet axe médian (8), de sorte que, lors du mouvement d'écartement de la pièce d'écartement (4;104) par rapport au premier axe (1), la pièce d'écartement (4;104) glisse le long du au moins un élément à griffes de retenue (5;105;205) et, en raison de la présence de la surface oblique (53,56;1053), écarte le au moins un élément à griffes de retenue (5;105;205), de l'emplacement d'accouplement du second axe (2;102).

8. Accouplement selon l'une des revendications 1 à 7, **caractérisé en ce que** le au moins un élément à griffes de retenue (5;105;205) possède des première et seconde griffes symétriques (1051,1052).

9. Accouplement selon l'une des revendications 1 à 8, **caractérisé en ce qu'**il comprend plusieurs desdits éléments à griffes de retenue (5;105;205), qui sont répartis uniformément autour des premier et second axes (1,2;102).

10. Accouplement selon l'une des revendications 1 à 9, **caractérisé en ce que** le premier axe (1) est l'axe d'entraînement et que le second axe (2;102) est l'axe de réglage de la vanne (7).
